# EUROPEAN PATENT APPLICATION

(11) **EP 4 611 242 A1**
(43) Date of publication of application: **03.09.2025**
(21) Application number: 25160546.5
(22) Date of filing: 27.02.2025
(51) Int. Cl.: H02M 3/158, H02M 3/00

(54) **ZERO-BIAS TRANS-INDUCTOR VOLTAGE REGULATOR**

(30) Priority: 27.02.2024 US 202463558270 P
(71) Applicant: Google LLC, Mountain View, CA 94043 (US)
(72) Inventor: JIANG, Shuai, Mountain View, 94043 (US)
(74) Representative: Betten & Resch

(57) **Abstract**

The present disclosure describes moving one phase of the TLVR topology from a primary side of the topology to a secondary side. By doing so, the secondary side phase is able to drive the TLVR secondary winding current with equal magnitude and opposite direction to the primary winding current for both transient and DC. Therefore, all the TLVR inductors see zero bias of magnetic flux in the cores under any loading conditions. With this feature, TLVR inductor size can be significantly reduced by reducing the saturation current. As another option, the inductor size can remain unchanged and the Zero-Bias TLVR can be optimized for power efficiency by increasing the inductance. With higher inductance, the voltage regulator switching frequency can be reduced accordingly to boost up the power efficiency.

## Description

### CROSS-REFERENCE TO RELATED APPLICATIONS

This application claims the benefit of the filing date of U.S. Provisional Patent Application No. 63/558,270, filed February 27, 2024, the disclosure of which is hereby incorporated herein by reference.

### BACKGROUND

Existing trans-inductor voltage regulator (TLVR) technology has been widely adopted for servers and machine learning systems. TLVR offers superior transient performance than traditional multiphase voltage regulators due to its significantly reduced equivalent output transient inductance. However, existing TLVR technology has not been optimized for power efficiency and density. One of the limitations of existing TLVR technology is that each trans-inductor has to be designed for the peak load current in terms of magnetic core saturation. This is because the secondary windings of the TLVR inductors only carry AC current, and thus huge steady state DC bias magnetic flux is present in the trans-inductor core at the steady state of peak load. Consequently, the trans-inductor size or inductance has to be designed to meet the peak load. For example, under a given size constraint, the trans-inductor magnetizing inductance (Lm) can't be designed large enough such that the switching frequency of the TLVR must be increased to meet the inductor current ripple requirement. As another example, under a given inductance requirement, the trans-inductor size can't be designed small enough for power density optimization in certain cases. In either case, the TLVR power efficiency or power density is compromised.

### BRIEF SUMMARY

Trans-Inductor Voltage Regulator (TLVR) technology is an ultra-fast transient performance voltage regulator technology with several advantages. The present disclosure describes moving one phase of the TLVR topology from a primary side of the topology to a secondary side. By doing so, the secondary side phase is able to drive the TLVR secondary winding current with equal magnitude and opposite direction to the primary winding current for both transient and DC. Therefore, all the TLVR inductors see zero bias of magnetic flux in the cores under any loading conditions. With this feature, TLVR inductor size can be significantly reduced by reducing the saturation current. As another option, the inductor size can remain unchanged and the Zero-Bias TLVR can be optimized for power efficiency by increasing the inductance. With higher inductance, the voltage regulator switching frequency can be reduced accordingly to boost up the power efficiency.

With the secondary winding of the Zero-Bias TLVR carrying DC current, extra power loss introduced by the DC resistance of the secondary windings and printed circuit board (PCB) interconnects should be managed. The present disclosure further provides trans-inductor physical structures by using a grouped trans-inductor concept, such as 2-phase grouped trans-inductor and 3-phase grouped trans-inductor. These grouped trans-inductors can minimize the extra DC resistance of the secondary windings and PCB interconnects to sufficiently low levels. The net benefit of the Zero-Bias TLVR will be maximized by using these grouped trans-inductors.

Several example structures of zero-bias TLVR architectures are provided herein.

One aspect of the disclosure provides a Trans-Inductor Voltage Regulator (TLVR), comprising a plurality of phases, each of the plurality of phases comprising a transistor receiving an input voltage; wherein a first phase transistor outputs to a plurality of secondary inductors, each of the secondary inductors corresponding to a respective phase; wherein at least a second phase transistor outputs to a primary inductor corresponding to one of the secondary inductors; and wherein winding currents through each primary inductor and corresponding secondary inductor are balanced. In some examples, the first phase outputs to a compensation inductor. The compensation inductor may output to each of the secondary inductors in series. In some examples, an output of the secondary inductors and an output of the primary inductors are provided to a same output node. The transistor may be a metal-oxide-semiconductor field-effect-transistor (MOSFET). In some examples, two or more phases are grouped. For phases within a group, secondary inductor windings may be wrapped around two or more posts. The two or more posts may be separate from posts around which primary inductor windings are wrapped. In other examples, the two or more posts are the same posts around which the primary inductor windings are wrapped. A compensation inductor may be external to the secondary windings, or included within the secondary windings.

Another aspect of the disclosure provides a processing device, the processing device comprising: a processing unit; a printed circuit board (PCB) in communication with the processing unit; and a Trans-Inductor Voltage Regulator (TLVR), comprising: a plurality of phases, each of the plurality of phases comprising a transistor receiving an input voltage; wherein a first phase transistor outputs to a plurality of secondary inductors, each of the secondary inductors corresponding to a respective phase; and wherein at least a second phase transistor outputs to a primary inductor corresponding to one of the secondary inductors; and wherein winding currents through each primary inductor and corresponding secondary inductor are balanced. In some examples, the first phase outputs to a compensation inductor. In some examples, the compensation inductor outputs to each of the secondary inductors in series. An output of the secondary inductors and an output of the primary inductors may be provided to a same output node. The transistor may be, for example, a metal-oxide-semiconductor field-effect-transistor (MOSFET). In some examples of the processing device, two or more phases are grouped. For phases within a group, secondary inductor windings may be wrapped around two or more posts. The two or more posts may be separate from posts around which primary inductor windings are wrapped.

### BRIEF DESCRIPTION OF THE DRAWINGS

FIG. 1 is a schematic diagram of a zero-bias Trans-Inductor Voltage Regulator (TLVR), according to aspects of the disclosure.
Fig. 2 is a layout diagram of a zero-bias TLVR, according to aspects of the disclosure.
Fig. 3 is a schematic diagram of a zero-bias TLVR grouped trans-inductor with 2-phase grouping, according to aspects of the disclosure.
Figs. 4A-C are views of a physical structure of the zero-bias TLVR grouped trans-inductor with 2-phase grouping of Fig. 3.
Fig. 5 is a schematic diagram of a zero-bias TLVR grouped trans-inductor with 3-phase grouping, according to aspects of the disclosure.
Figs. 6A-C are views of a physical structure of the zero-bias TLVR grouped trans-inductor with 3-phase grouping of Fig. 5.
Fig. 7 illustrates a grouped trans-inductor winding structure, according to aspects of the disclosure.
Fig. 8 illustrates another grouped trans-inductor winding structure, according to aspects of the disclosure.
Fig. 9 is a layout diagram of a 3-phase grouped trans-inductor according to aspects of the disclosure.
Fig. 10 is a layout diagram of a 2-phase grouped trans-inductor according to aspects of the disclosure.
Fig. 11 is a schematic diagram of a TLVR with 2-phase grouping and internal compensation inductor, according to aspects of the disclosure.
Figs. 12A-C are views of a physical structure of the zero-bias TLVR grouped trans-inductor with 2-phase grouping and internal compensation inductor of Fig. 11.
Fig. 13 is a schematic diagram of a zero-bias TLVR grouped trans-inductor with 3-phase grouping and internal compensation inductor, according to aspects of the disclosure.
Figs. 14A-C are views of a physical structure of the zero-bias TLVR grouped trans-inductor with 3-phase grouping and internal compensation inductor of Fig. 13.
Fig. 15 illustrates a grouped trans-inductor winding structure with internal compensation inductor, according to aspects of the disclosure.
Fig. 16 illustrates a grouped trans-inductor winding structure with internal compensation inductor, according to aspects of the disclosure.
Fig. 17 is a layout diagram of a 3-phase grouped trans-inductor with internal compensation inductor according to aspects of the disclosure.
Fig. 18 is a layout diagram of a 2-phase grouped trans-inductor with internal compensation inductor according to aspects of the disclosure.
Fig. 19 is an example of operation output and equivalent circuit model of a zero-bias TLVR with grouped trans-inductor, according to aspects of the disclosure.
Fig. 20 illustrates an example of two grouped trans-inductors with their secondary windings interconnected, according to aspects of the disclosure.
Fig. 21 is a schematic diagram of the TLVR vertical power delivery of Fig. 20.
Fig. 22 is a block diagram of an example TLVR building block according to aspects of the disclosure.
FIG. 23 is a flow diagram of an example process for providing power to an ASIC or xPU.
FIG. 24 depicts a block diagram of an example electronic device in accordance with aspects of the disclosure.

### DETAILED DESCRIPTION

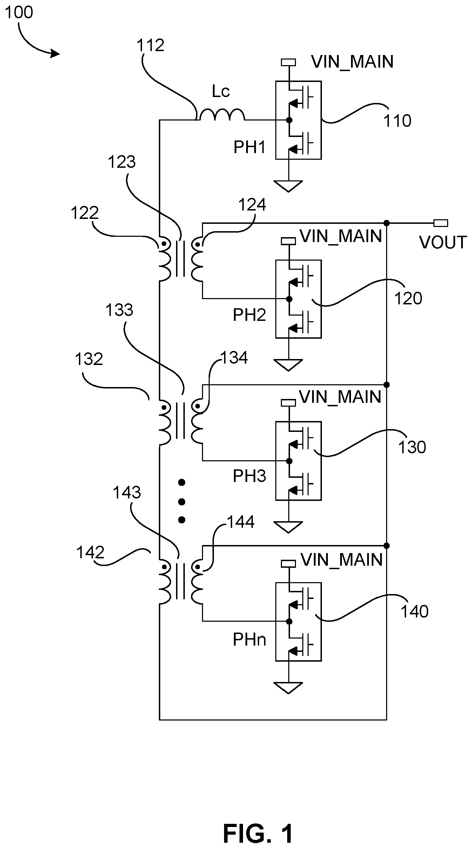

FIG. 1 is a schematic diagram of a zero-bias Trans-Inductor Voltage Regulator (TLVR) 100 having an example circuit topology. In this example, the circuit topology includes a plurality of transistor phases 110, 120, 130, 140. Each transistor may be, for example, a metal-oxide-semiconductor field-effect transistor (MOSFET) or other transistor. While several transistor phases 110-140 are shown, it should be understood that additional or fewer phases may be included in the topology. Each transistor may have an associated controller (not shown), which may be the same controllers used for conventional TLVR technology.

PH1 transistor phase 110 outputs to compensation inductor 112. Each of transistor phases 120, 130, 140 delivers an output to a TLVR inductor, including an inductor core, a primary winding, and a secondary winding. For example, PH2 transistor phase 120 outputs to a TLVR inductor including core 123, primary winding 124, and secondary winding 122; PH3 transistor phase 130 outputs to the TLVR inductor including core 133, primary winding 134, and secondary winding 132; PH4 transistor phase 140 outputs to the TLVR inductor including core 143, primary winding 144, and secondary winding 142. The compensation inductor 112 and each of the secondary windings 122, 132, 142 are connected in series, and coupled between PH1 phase 110 and output voltage. While the compensation inductor 112 is shown as coupled to output of transistor phase PH1 110, in other examples the compensation inductor may be moved to other positions in the circuit, but remain connected in series with the secondary windings 122, 132, 142.

The series loop of secondary windings allows for the use of DC current, because the transistors 110-140, being the active components, are coupled to the secondary windings. As long as DC components at the secondary windings 122-142 have equal current and opposite direction from the primary windings 24-144, magnetic flux inside each TLVR inductor is canceled. DC bias flux density in all of the TLVR inductors remains zero when the primary and secondary winding currents are balanced. This enables much higher magnetic core utilization. If keeping the inductor size unchanged, magnetizing inductance (Lm) can be significantly increased to reduce inductor current ripples for higher power efficiency.

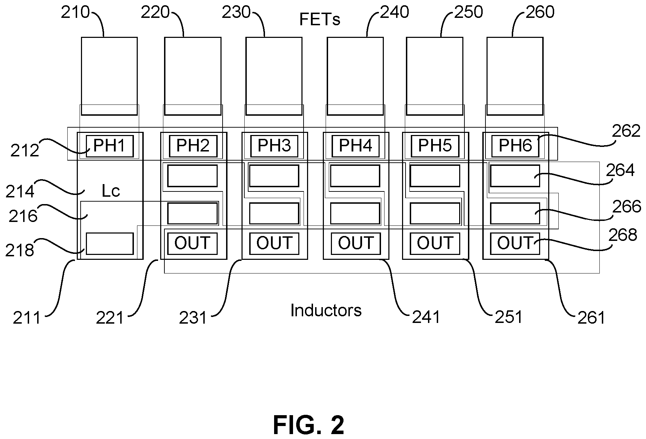

Fig. 2 is a layout diagram of an example zero-bias TLVR layout, including a plurality of transistors 210, 220, 230, 240, 250, 260 and corresponding inductors 211, 221, 231, 241, 251, 261. Each of the transistors 210-260 may be, for example, MOSFETS, each having a high side and a low side. Each inductor 211-261 may represent a different phase and include a plurality of terminals. As illustrated, each inductor 211-261 includes four terminals. For example, PH1 inductor 211 includes first terminal 212, second terminal 214, third terminal 216, and fourth terminal 218. Similarly, PH6 inductor 261 includes first terminal 262, second terminal 264, third terminal 266, and fourth terminal 268. The first terminal of each inductor 211-261 may be coupled to an input terminal of a respective transistor 210-260, such as via copper connections on a printed circuit board (PCB). The second terminal of each of inductors 221, 231, 241, 251 may be coupled to the third terminal of the subsequent adjacent inductor. For example, the second terminal of second inductor 221 is coupled to the third terminal of third inductor 231. The second terminal of third inductor 231 is coupled to the third terminal of fourth inductor 241, etc. The second terminal 264 of inductor 261 is coupled in series with each output terminal of inductors 221-261.

According to some examples, phases of the TLVR may be grouped. For example, any TLVR having three or more phases may be grouped using 2-phase groupings, 3-phase groupings, or any number n phase groupings. Grouping affects the physical wiring of the inductors. For example, when grouping the phases, the physical windings on the secondary side may be made shorter, resulting in lower resistance and higher efficiency. Grouping also reduces a number of terminals needed for secondary windings. For example, grouping can reduce the thin copper wires used for interconnections between terminals by obviating a need for interconnects between groups.

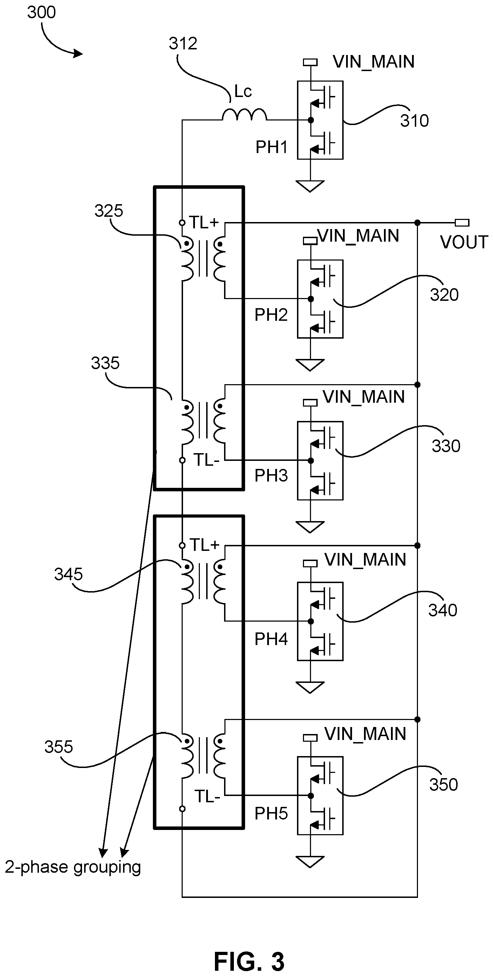

Fig. 3 is a schematic diagram of a zero-bias TLVR grouped trans-inductor with 2-phase grouping and external compensation inductor. In this example, the topology includes five phases of transistors 310, 320, 330, 340, 350. PH1 transistor 310 is coupled to external compensation inductor 312. PH2 transistor 320 is coupled to transinductor 325, and PH3 transistor 330 is coupled to transinductor 335. Similarly, PH4 transistor 340 is coupled to transinductor 345, and PH5 transistor is coupled to transinductor 355. A first 2-phase grouping includes transinductors 325, 335, with transinductor 325 being positive and transinductor 335 being negative. A second 2-phase grouping includes transinductors 345, 355, with transinductor 345 being positive and transinductor 355 being negative. While several transinductors 325-355 are shown and divided into two groupings, additional transinductors may also be included in the topology and divided into additional groupings. Moreover, as discussed later herein, each grouping may include additional phases.

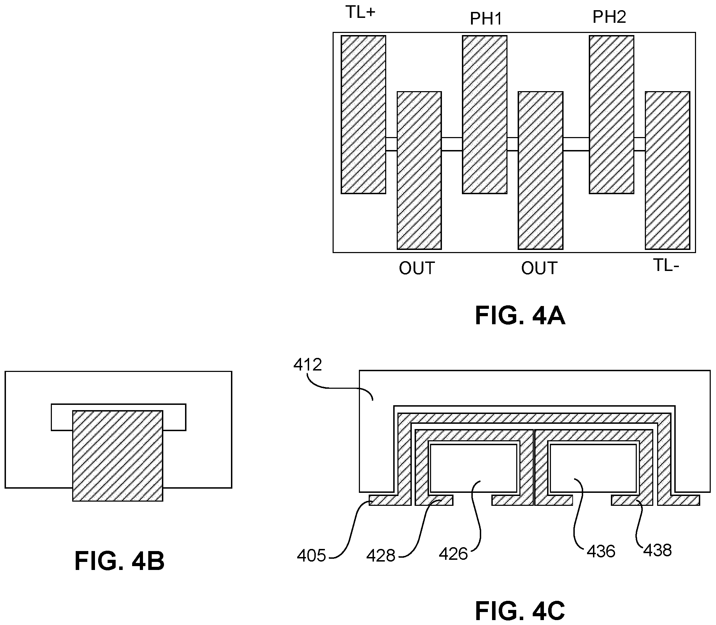

Figs. 4A-C are views of a physical structure of the zero-bias TLVR grouped trans-inductor with 2-phase grouping of Fig. 3, the physical structure including magnetic core posts with phase windings wrapped around them. In particular, Fig. 4A shows a bottom view, Fig. 4B shows a side cross-sectional view, and Fig. 4C shows a front cross-sectional view. Each of magnetic core posts 426, 436 has a respective primary winding 428, 438. Magnetic core post 426 may correspond to a first phase and magnetic core post 436 may correspond to a second phase. Secondary winding 405 groups the first and second phases. Compensation inductor 412 remains external to the secondary winding 405. This configuration provides the flexibility of using off-the-shelf components.

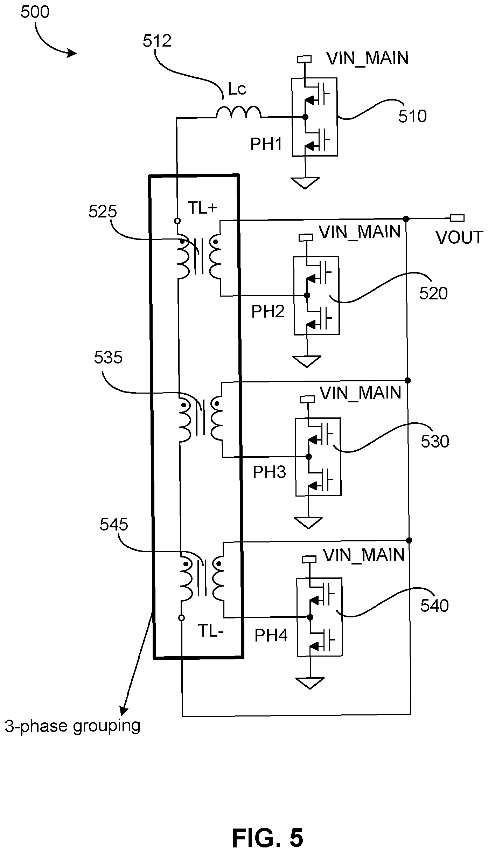

Fig. 5 is a schematic diagram of a zero-bias TLVR grouped trans-inductor with 3-phase grouping and external compensation inductor 512. This example topology includes three transistors 520, 530, 540, each outputting to a respective transinductor 525, 535, 545. The three transinductors 525, 535, 545 are grouped into a 3-phase grouping. External compensation inductor 512 is coupled to a first phase transistor 510.

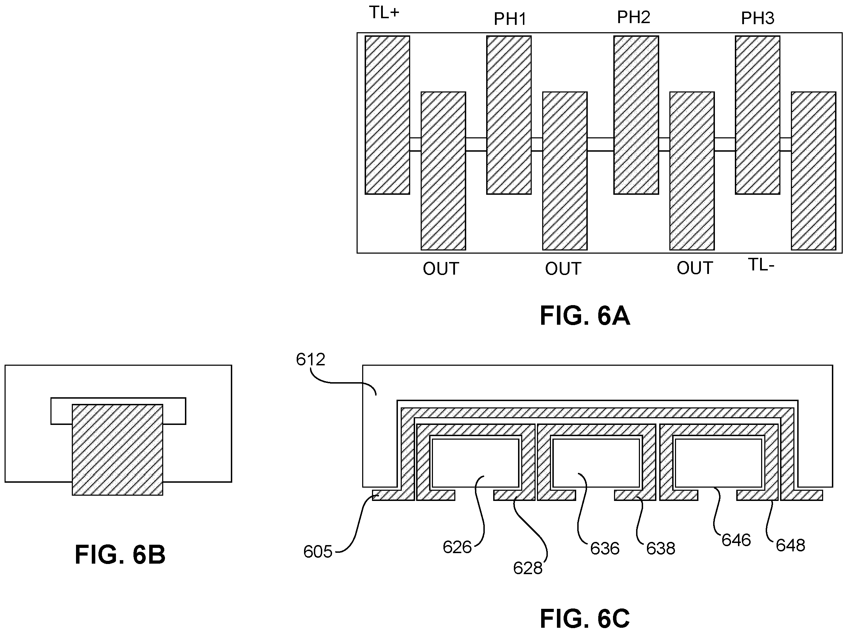

Figs. 6A-C are views of a physical structure of the zero-bias TLVR grouped trans-inductor with 3-phase grouping of Fig. 5. In particular, Fig. 6A shows a bottom view, Fig. 6B shows a side cross-sectional view, and Fig. 6C shows a front cross-sectional view. Each of magnetic core posts 626, 636, 646 has a respective primary winding 628, 638, 648. Magnetic core post 626 may correspond to a first phase, magnetic core post 636 may correspond to a second phase, and magnetic core post 646 may correspond to a third phase. Secondary winding 605 groups the first, second, and third phases. Compensation inductor 612 remains external to the secondary winding 605.

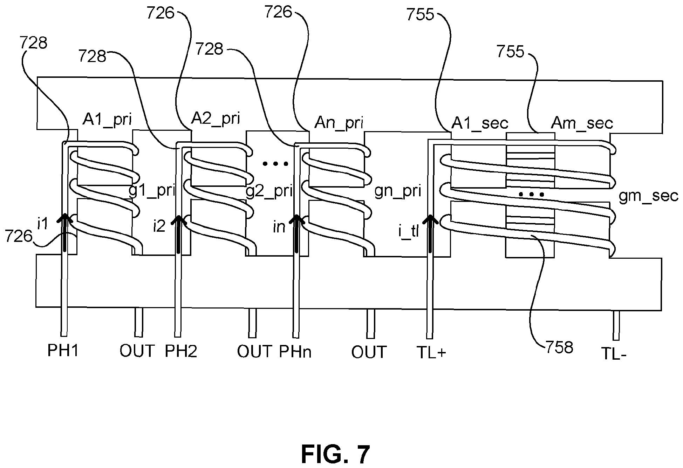

Fig. 7 illustrates an N-phase grouped trans-inductor winding structure. The N-phase grouped transinductor can be implemented with high permeability magnetic core material, such as ferrite or other material. It includes N posts 726 for N primary windings 728. The post 726 for each primary winding 728 has a cross-sectional area Ak_pri (k=1,2,...,n) and air gap gk_pri (k=1,2,...,n). Ak_pri and gk_pri are designed based on the primary winding magnetizing inductance (Lm_pri) and saturation current requirements. It also has additional M posts 755 for the secondary winding 758 coupling, where M is an integer greater than or equal to 1. The secondary winding 758 can be implemented by one winding, or multiple windings connected in series. The primary winding 728 and secondary winding 758 have an equal number of turns such that the DC bias flux in the magnetic core gets canceled, essentially to zero bias. The post 755 for each secondary winding 758 has its cross-section area Aj_sec (j=1,2,...m) and air gap gj_sec (j=1,2,...,m). Aj_sec and gj_sec are designed based on the secondary winding magnetizing inductance (Lm_sec) and saturation current requirements. In some examples, gj_sec can be designed as no gap.

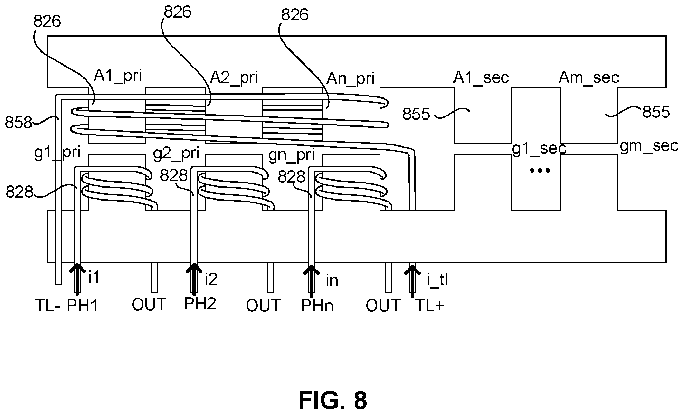

Fig. 8 illustrates another N-phase grouped trans-inductor winding structure. The N-phase grouped trans-inductor can be implemented with high permeability magnetic core material, and may include N posts 826 for N primary windings 828. The post 826 for each primary winding 828 has its cross-section area Ak_pri (k=1,2,...,n) and air gap gk_pri (k=1,2,...,n). Ak_pri and gk_pri are designed based on the primary winding 828 magnetizing inductance (Lm_pri) and saturation current requirements. The trans-inductor winding structure also has additional M posts 855. Instead of coupling the secondary winding directly with these M posts 855 as in Fig. 7, secondary winding 858 can be coupled with the N primary posts 826, together with the N primary windings 828. The primary winding 828 and secondary winding 858 has an equal number of turns, such that the DC bias flux in the magnetic core gets canceled, essentially to zero bias. Each of the M posts 855 has its cross-section area Aj_sec (j=1,2,...m) and air gap gj_sec (j=1,2,...,m). Aj_sec and gj_sec are properly designed based on the secondary winding magnetizing inductance (Lm_sec) and saturation current requirements. In some examples, gj_sec can be designed as no gap.

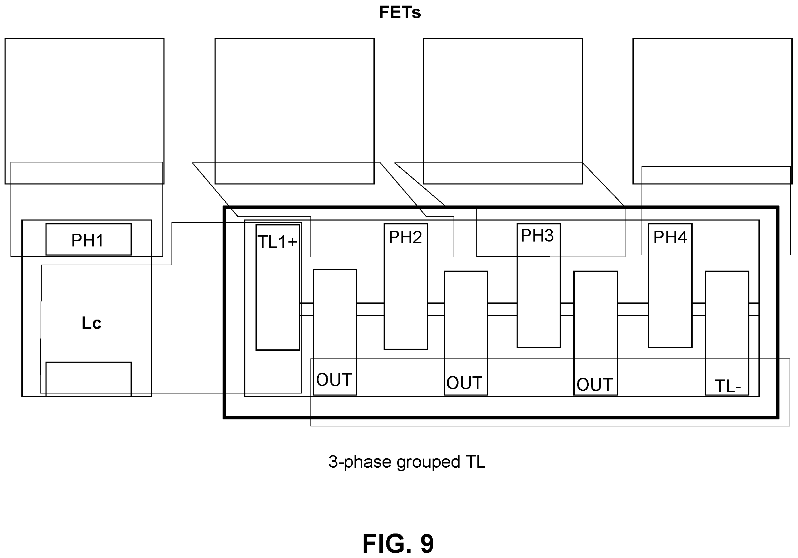

Fig. 9 is a layout diagram of a 4-phase zero-bias TLVR layout, having a 3-phase grouped trans-inductor. For example, such layout may correspond to the schematic diagram of Fig. 5. As compared to the layout of Fig. 2, where the phases were not grouped, secondary windings and PCB interconnection DC resistance is significantly reduced by grouping the trans-inductor phases in Fig. 9.

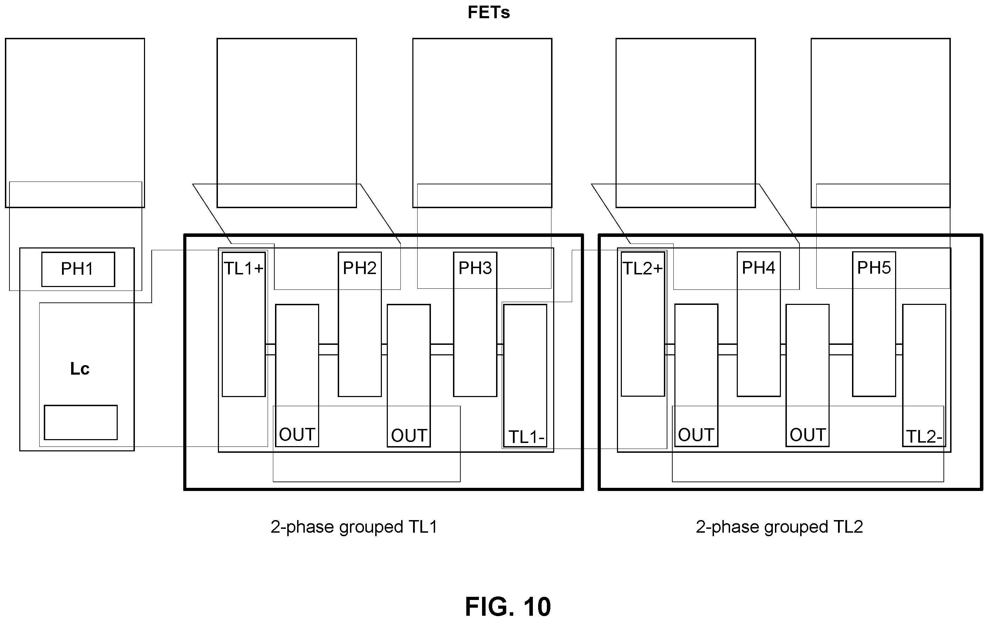

Fig. 10 is a layout diagram of a 5-phase zero-bias TLVR layout, having two groups of 2-phase grouped trans-inductors. For example, such layout may correspond to the schematic diagram of Fig. 3. As compared to the layout of Fig. 2, where the phases were not grouped, secondary windings and PCB interconnection DC resistance is significantly reduced by grouped the trans-inductor phases in Fig. 10.

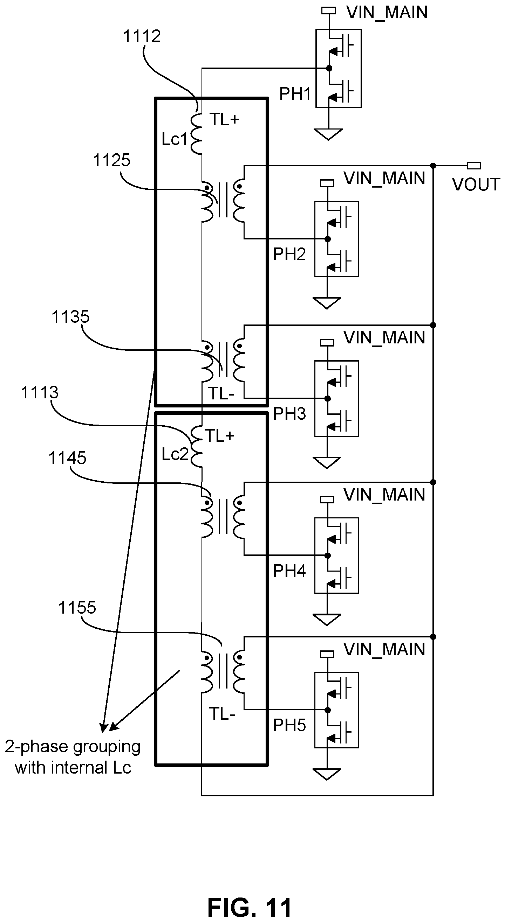

Whereas the examples of Figs. 3-10 include an external compensation inductor, in other examples phase groupings in the zero-bias TLVR may include an internal compensation inductor. Some such examples are described in connection with Figs. 11-18 below.

Fig. 11 is a schematic diagram of a TLVR with 2-phase grouping and internal compensation inductor. As shown, a first 2-phase grouping includes transinductors 1125, 1135 as well as first compensation inductor 1112. A second 2-hase grouping includes transinductors 1145, 1155 as well as second compensation inductor 1113.

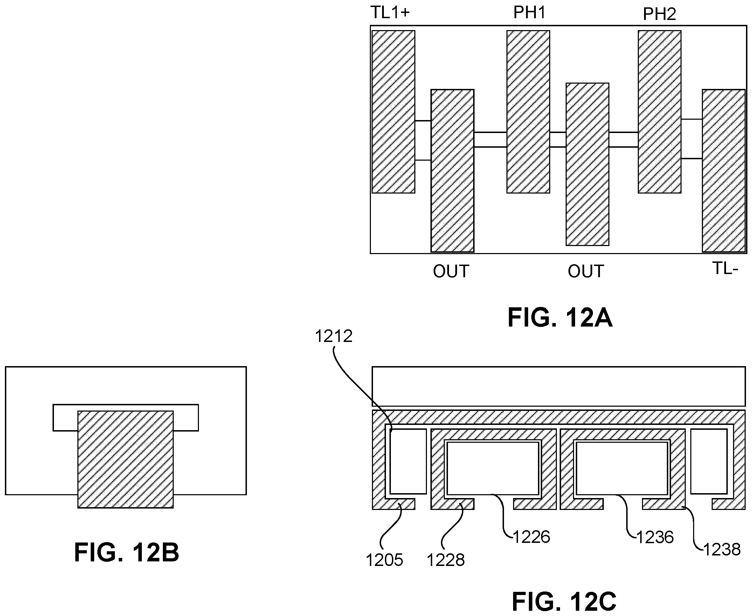

Figs. 12A-C are views of a physical structure of the zero-bias TLVR grouped trans-inductor with 2-phase grouping. In particular, Fig. 11A shows a bottom view, Fig. 12B shows a side cross-sectional view, and Fig. 12C shows a front cross-sectional view. Each of magnetic core posts 1226, 1236 has a respective primary winding 1228, 1238. Magnetic core post 1226 may correspond to a first phase and magnetic core post 1236 may correspond to a second phase. Secondary winding 1205 groups the first and second phases. In contrast to Fig. 4, in this example compensation inductor 1212 is internal to the secondary winding 1205.

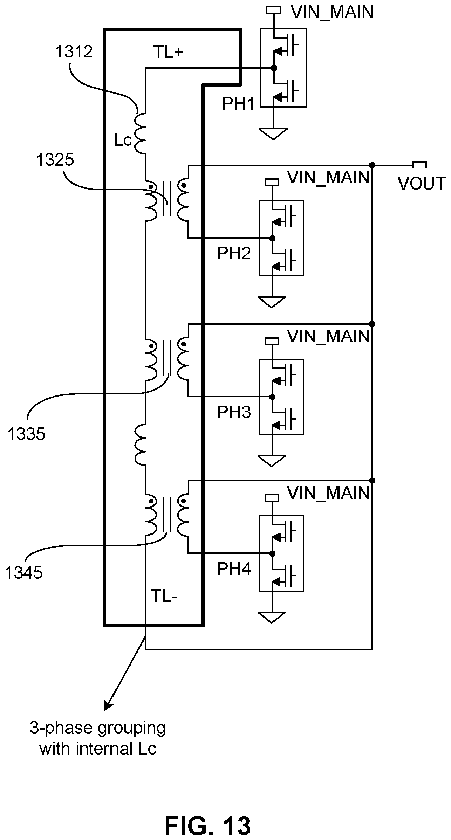

Fig. 13 is a schematic diagram of a zero-bias TLVR grouped trans-inductor with 3-phase grouping and internal compensation inductor. This example topology includes three transinductors 1325, 1335, 1345. The three transinductors 1325, 1335, 1345 are grouped into a 3-phase grouping. In contrast to Fig. 5, in this example compensation inductor 1312 is included within the 3-phase grouping.

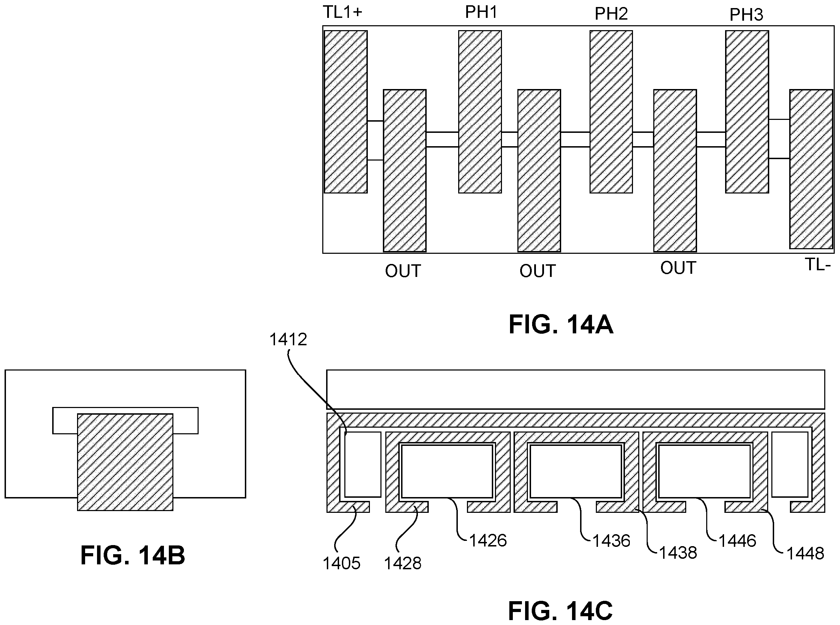

Figs. 14A-C are views of a physical structure of the zero-bias TLVR grouped trans-inductor with 2-phase grouping of Fig. 13. In particular, Fig. 14A shows a bottom view, Fig. 14B shows a side cross-sectional view, and Fig. 14C shows a front cross-sectional view. Each of magnetic core posts 1426, 1436, 1446 has a respective primary winding 1428, 1438, 1448. Magnetic core post 1426 may correspond to a first phase, magnetic core post 1436 may correspond to a second phase, and magnetic core post 1446 may correspond to a third phase. Secondary winding 1405 groups the first, second, and third phases. In contrast to Fig. 6, in this example compensation inductor 1412 is encompassed within the secondary winding 1405.

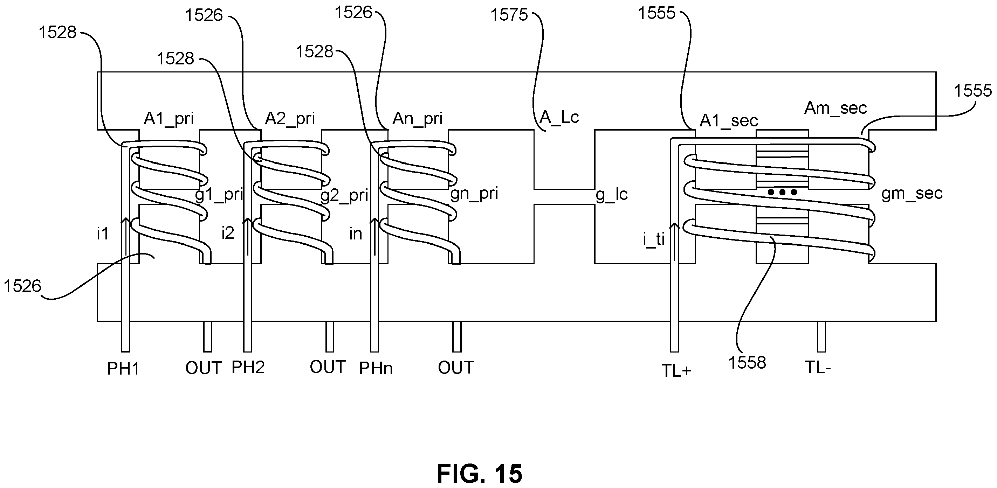

Fig. 15 illustrates an N-phase grouped trans-inductor winding structure with internal compensation inductor. The N-phase grouped trans-inductor can be implemented with high permeability magnetic core material, such as ferrite. It has N posts 1526 for N primary windings 1528. The post 1526 for each primary winding 1528 has a cross-section area Ak_pri (k=1,2,...,n) and air gap gk_pri (k=1,2,...,n). Ak_pri and gk_pri are designed based on the primary winding magnetizing inductance (Lm_pri) and saturation current requirements.

The N-phase grouped trans-inductor also has M additional posts 1555 for secondary winding coupling 1558. The secondary winding 1558 can be implemented by one winding, or multiple windings connected in series. The post 1555 for each secondary winding 1558 has a cross-section area Aj_sec (j=1,2,...m) and air gap gj_sec (j=1,2,...,m). Aj_sec and gj_sec are designed based on the secondary winding magnetizing inductance (Lm_sec) and saturation current requirements. Sometimes gj_sec can be designed as no gap.

Rather than using an external compensation inductor as shown in Fig. 7, the compensation inductor in Fig. 15 is included by adding one or more compensation inductor posts 1575 with a total cross-section area of A_Lc and air gap g_lc. The primary winding 1528 and secondary winding 1558 has equal number of turns to cancel a majority of the DC bias flux. A small amount of DC bias flux remains and goes through the compensation inductor post 1575.

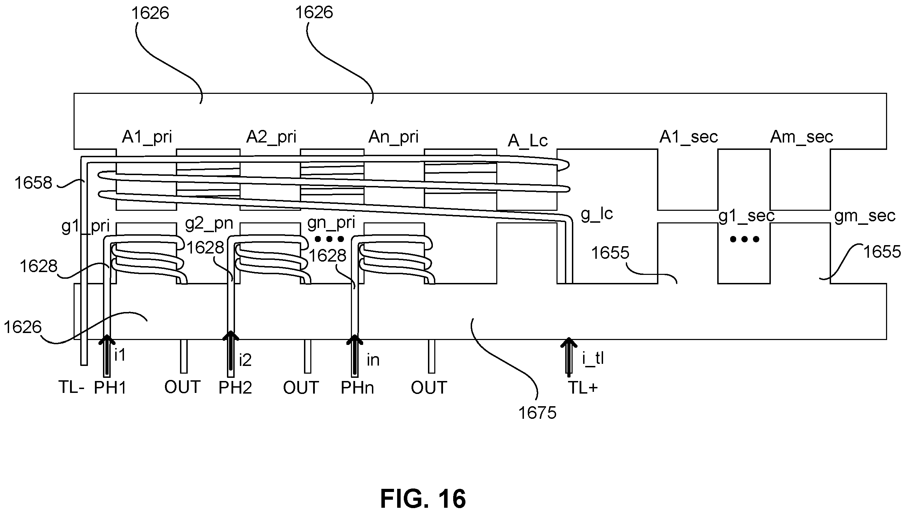

Fig. 16 illustrates another N-phase grouped trans-inductor winding structure with internal compensation inductor. The N-phase grouped trans-inductor can be implemented with high permeability magnetic core material, and has N posts 1626 for N primary windings 1628. The post 1626 for each primary winding 1628 has a cross-section area Ak_pri (k=1,2,...,n) and air gap gk_pri (k=1,2,...,n). Ak_pri and gk_pri are designed based on the primary winding magnetizing inductance (Lm_pri) and saturation current requirements. The N-phase grouped trans-inductor also has M additional posts 1655 and one or more compensation inductor posts 1675. Instead of coupling secondary winding 1658 directly with these M posts 1655, it can be coupled with the combination of the N primary posts 1626 and the compensation inductor posts 1675. The primary winding 1628 and secondary winding 1658 have an equal number of turns to cancel a majority of the DC bias flux. A small amount of DC bias flux remains and goes through the compensation inductor post 1675. Each of the M posts 1655 has a cross-section area Aj_sec (j=1,2,...m) and air gap gj_sec (j=1,2,...,m). Aj_sec and gj_sec are designed based on the secondary winding magnetizing inductance (Lm_sec) and saturation current requirements. In some examples, gj_sec can be designed as no gap.

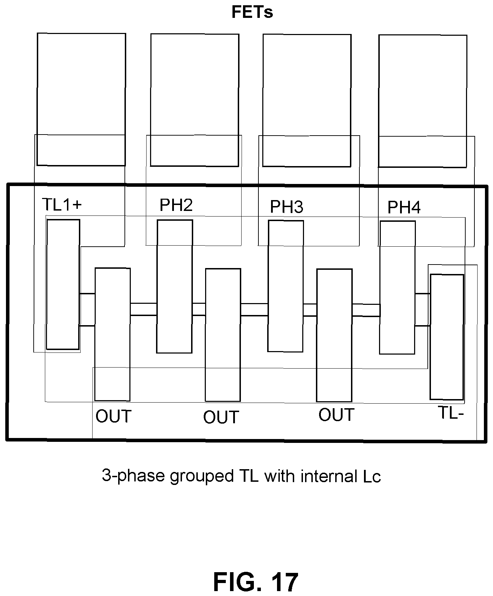

Fig. 17 is a layout diagram of a 3-phase grouped trans-inductor with internal compensation inductor. For example, such layout may correspond to the schematic diagram of Fig. 13. As compared to the layout of Fig. 2, where the phases were not grouped, secondary windings and PCB interconnection DC resistance is significantly reduced by grouped the trans-inductor phases in Fig. 17.

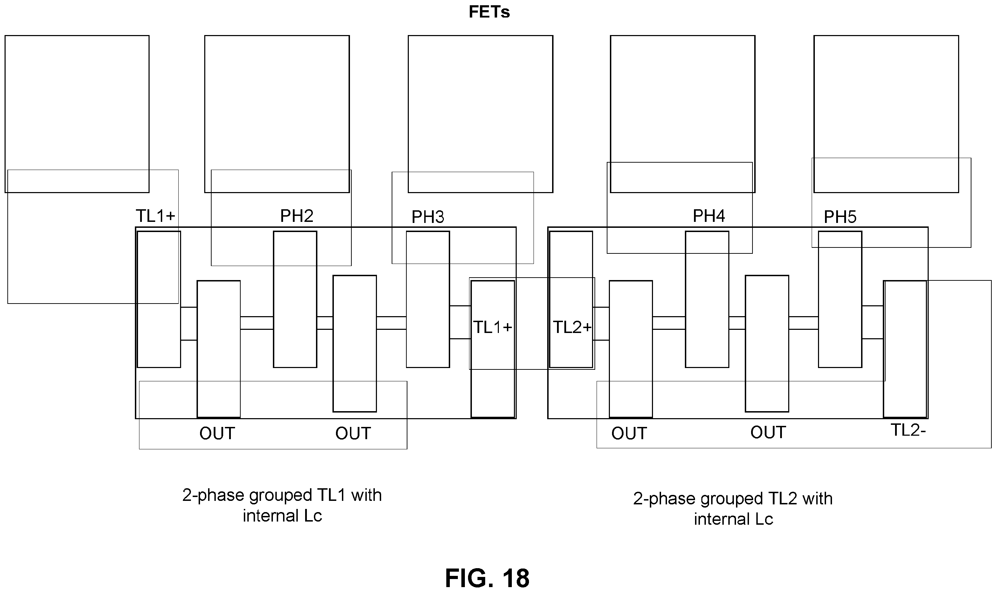

Fig. 18 is a layout diagram of a 2-phase grouped trans-inductor with internal compensation inductor. For example, such layout may correspond to the schematic diagram of Fig. 11. As compared to the layout of Fig. 2, where the phases were not grouped, secondary windings and PCB interconnection DC resistance is significantly reduced by grouped the trans-inductor phases in Fig. 18.

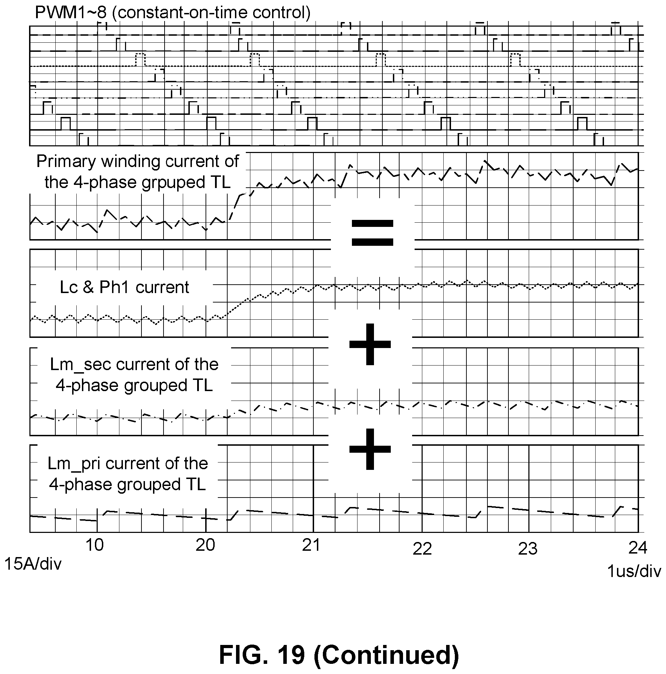

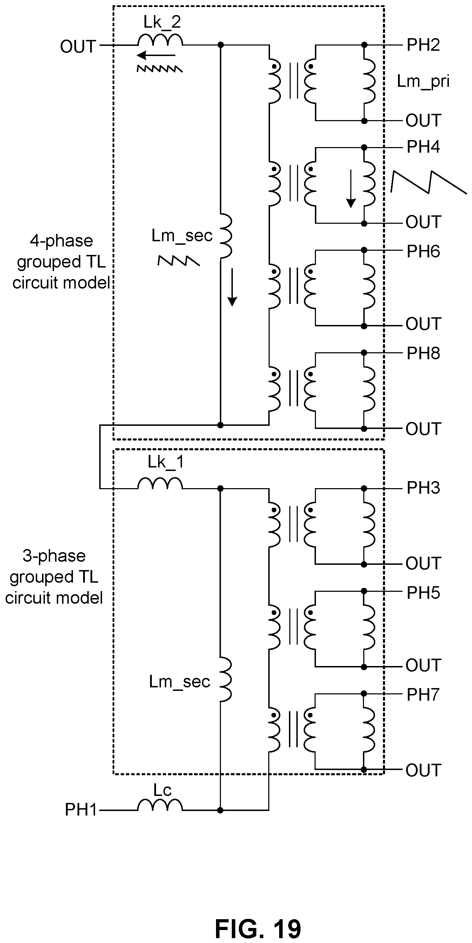

Fig. 19 illustrates a schematic of an example zero-bias TLVR and associated operation. The TLVR shown in this example is an 8-phase zero-bias TLVR using a 4-phase grouped trans-inductor, a 3-phase grouped trans-inductor and compensation inductor.

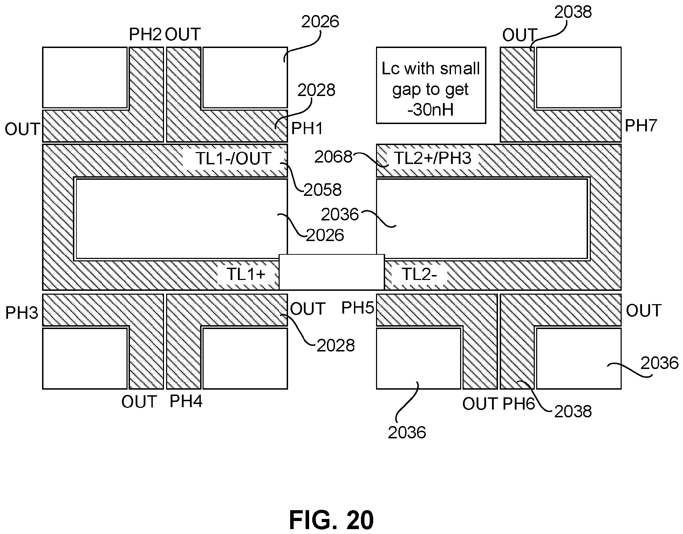

Fig. 20 illustrates another example of TLVR vertical power delivery. The layout in this example includes a different magnetic core post arrangement, as compared to the other examples discussed above. In a first grouping, magnetic core posts 2026 are at least partially surrounded by primary windings 2028 for phases PH1-PH4 or secondary winding 2058. In a second grouping, magnetic core posts 2036 are at least partially surrounded by primary windings 2038 for phases PH5-PH7 or secondary winding 2068. As shown the secondary winding 2058 of the first grouping is coupled to the secondary winding 2068 of the second grouping.

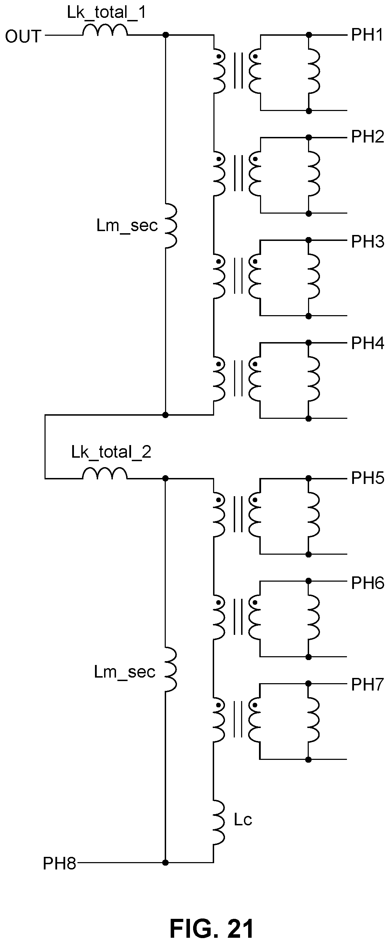

Fig. 21 is a schematic diagram of the TLVR vertical power delivery of Fig. 20.

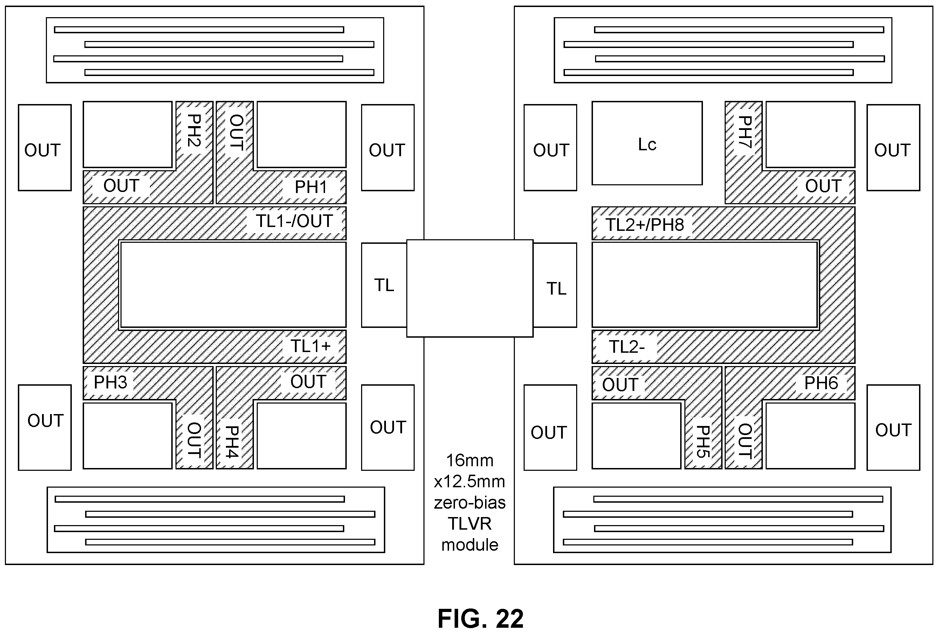

Fig. 22 illustrates an example TLVR building block corresponding to the configuration of Fig. 20.

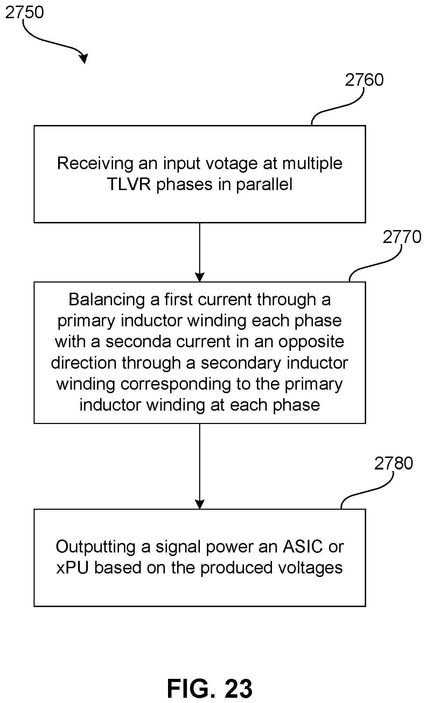

FIG. 23 is a flow diagram of an example process for providing power to an ASIC or xPU using a zero-bias TLVR. The process 2750 may be performed, by way of example, by a zero-bias TLVR, such as described in connection with FIGs. 1-22. While the operations of the process 2750 are described in a particular order, it should be understood that the order may be modified and operations may be performed in parallel. Moreover, it should be understood that operations may be added or omitted.

In block 2760, an input voltage is received at multiple TLVR phases in parallel. Each phase may include a transistor, such as a MOSFET. The transistor of a first phase may output to a compensation inductor. The transistor of the other phases may each output to a primary inductor that is coupled to an output. Each primary inductor may have a corresponding secondary inductor, coupled in series with the compensation inductor, and providing output to the same output as the primary inductors.

In block 2770, a first current through the primary inductor winding at each phase is balanced with a second current in an opposite direction through the secondary inductor winding corresponding to the primary inductor winding at each phase. This equal and opposite current zeroes the DC bias flux density in all of the TLVR inductors. This enables higher magnetic core utilization with reduced inductor saturation.

In block 2780, a signal is output to power an ASIC or xPU based on the produced voltages.

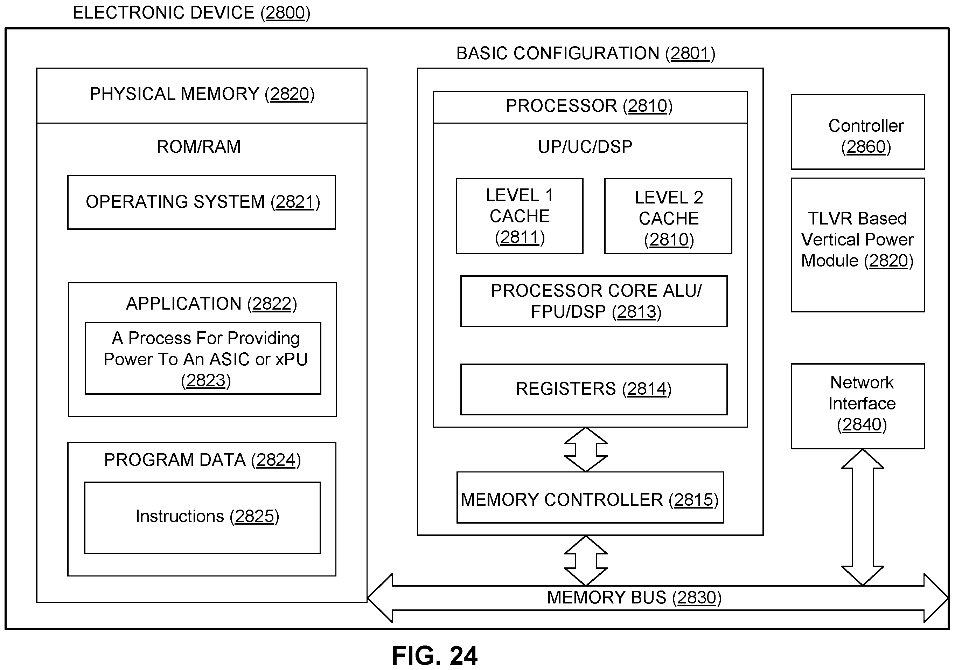

FIG. 24 depicts a block diagram of an example electronic device 2800. The electronic device 2800 may include one or more processors 2810, such as one or more xPUs described above, system memory 2820, a bus 2830, the networking interface(s) 2840, TLVR based vertical power VR module 2850, and other components (not shown), such as storage(s), output device interface(s), input device interface(s). A bus 2830 may be used for communicating between the processor 2810, the system memory 2820, the networking interface(s) 2840, and other components.

Depending on the desired configuration, the processor 2810 may be of any type including but not limited to a microprocessor, a microcontroller, a digital signal processor (DSP), or any combination thereof. The processor 2810 may include one or more levels of caching, such as a level one cache 2811 and a level two cache 28, a processor core 2813, and registers 2814. The processor core 2813 may include an arithmetic logic unit (ALU), a floating point unit (FPU), a DSP core, or any combination thereof. A memory controller 2815 may also be used with the processor 2810, or in some implementations the memory controller 2815 can be an internal part of the processor 2810.

Depending on the desired configuration, the physical memory 2820 may be of any type including but not limited to volatile memory, such as RAM, non-volatile memory, such as ROM, flash memory, etc., or any combination thereof. The physical memory 2820 may include an operating system 2821, one or more applications 2822, and program data 2824. Non-transitory computer-readable medium program data 2824 may include storing instructions 2825 that, when executed by the one or more processing devices, implement a process for providing power to an ASIC or xPU 2823. In some examples, the one or more applications 2822 may be arranged to operate with program data 2824 on an operating system 2821.

The electronic device 2800 may have additional features or functionality, and additional interfaces to facilitate communications between the basic configuration 2801 and any required devices and interfaces.

Physical memory 2820 may be an example of computer storage media. Computer storage media includes, but is not limited to, RAM, ROM, EEPROM, flash memory or other memory technology, or any other medium which can be used to store the desired information and which can be accessed by electronic device 2800. Any such computer storage media can be part of the device 2800.

Network interface(s) 2840 may couple the electronic device 2800 to a network (not shown) and/or to another electronic device (not shown). In this manner, the electronic device 2800 can be a part of a network of electronic devices, such as a local area network ("LAN"), a wide area network ("WAN"), an intranet, or a network of networks, such as the Internet. In some examples, the electronic device 2800 may include a network connection interface for forming a network connection to a network and a local communications connection interface for forming a tethering connection with another device. The connections may be wired or wireless. The electronic device 2800 may bridge the network connection and the tethering connection to connect the other device to the network via the network interface(s) 2840.

TLVR based vertical power VR module 2850 may include any one of the VR module designs described above. TLVR based vertical power VR module 2850 may be used to power one or more components of the electronic device 2800. For example, TLVR based vertical power VR module 2850 may be used to provide power to the one or more processors 2810.

The TLVR based vertical power VR module 2850 may not include an output capacitance board. Alternatively, or additionally, the single-layer VR module may rely on output capacitors positioned within the VR module, PCB, and/or xPU, as discussed herein with regard to, for example, Figs. 3B-3D. Operation of the VR module 2850 may be controlled by a controller, such as controller 2860, which may be compared to controller 360. The TLVR based vertical power VR module 2850 may include a leakage inductance configured to act as a compensation inductor, Lc. The TLVR based vertical power VR module 2850 may be implemented using a single multi-layer PCB/single-layer design. Thus, TLVR based vertical power VR module 2850 may have electrical and mechanical portions that are simplified compared to conventional VR modules. As a result, mass production manufacturing concerns associated with conventional VR modules, such as those concerns associated with a multi-layer structure design may be reduced. In addition, as a result, TLVR based vertical power VR module 2850 may have a reduced number of electrical and/or mechanical components, which may increase the reliability of the VR module 2850 while also increasing the efficiency of the VR module 2850.

The electronic device 2800 may be implemented as a portion of a small form factor portable (or mobile) electronic device such as a speaker, a headphone, an earbud, a cell phone, a smartphone, a smartwatch, a personal data assistant (PDA), a personal media player device, a tablet computer (tablet), a wireless web-watch device, a personal headset device, a wearable device, an application-specific device, or a hybrid device that include any of the above functions. The electronic device 2800 may also be implemented as a personal computer including both laptop computer and non-laptop computer configurations. The electronic device 2800 may also be implemented as a server, computing platforms, or a large-scale system.

Aspects of the present disclosure may be implemented as a computer implemented process, a system, or as an article of manufacture such as a memory device or non-transitory computer readable storage medium. The computer readable storage medium may be readable by an electronic device and may comprise instructions for causing an electronic device or other device to perform processes and techniques described in the present disclosure. The computer readable storage medium may be implemented by a volatile computer memory, non-volatile computer memory, solid state memory, flash drive, and/or other memory or other non-transitory and/or transitory media. Aspects of the present disclosure may be performed in different forms of software, firmware, and/or hardware. Further, the teachings of the disclosure may be performed by an application specific integrated circuit (ASIC), field programmable gate array (FPGA), or other component, for example.

Aspects of the present disclosure may be performed on a single device or may be performed on multiple devices. For example, program modules including one or more components described herein may be located in different devices and may each perform one or more aspects of the present disclosure. As used in this disclosure, the term "a" or "one" may include one or more items unless specifically stated otherwise. Further, the phrase "based on" is intended to mean "based at least in part on" unless specifically stated otherwise.

The above aspects of the present disclosure are meant to be illustrative. They were chosen to explain the principles and application of the disclosure and are not intended to be exhaustive or to limit the disclosure. Many modifications and variations of the disclosed aspects may be apparent to those of skill in the art.

Unless otherwise stated, the foregoing alternative examples are not mutually exclusive, but may be implemented in various combinations to achieve unique advantages. As these and other variations and combinations of the features discussed above can be utilized without departing from the subject matter defined by the claims, the foregoing description of the examples should be taken by way of illustration rather than by way of limitation of the subject matter defined by the claims. In addition, the provision of the examples described herein, as well as clauses phrased as "such as," "including" and the like, should not be interpreted as limiting the subject matter of the claims to the specific examples; rather, the examples are intended to illustrate only one of many possible examples. Further, the same reference numbers in different drawings can identify the same or similar elements.

Numerous examples are described in the present application, and are presented for illustrative purposes only. The described examples are not, and are not intended to be, limiting in any sense. One of ordinary skill in the art will recognize that the disclosed subject matter may be practiced with various modifications and alterations, such as structural, logical, software, and electrical modifications. It should be understood that the described features are not limited to usage in the one or more particular examples or drawings with reference to which they are described, unless expressly specified otherwise.

## Claims

1. A Trans-Inductor Voltage Regulator (TLVR), comprising:
a plurality of phases, each of the plurality of phases comprising a transistor receiving an input voltage;
wherein a first phase transistor outputs to a plurality of secondary inductors, each of the secondary inductors corresponding to a respective phase; and
wherein at least a second phase transistor outputs to a primary inductor corresponding to one of the secondary inductors; and
wherein winding currents through each primary inductor and corresponding secondary inductor are balanced.

2. The TLVR of claim 1, wherein the first phase outputs to a compensation inductor.

3. The TLVR of claim 2, wherein the compensation inductor outputs to each of the secondary inductors in series.

4. The TLVR of one of claims 1 to 3, wherein an output of the secondary inductors and an output of the primary inductors are provided to a same output node; and/or
wherein the transistor comprises a metal-oxide-semiconductor field-effect-transistor (MOSFET).

5. The TLVR of one of claims 1 to 4, wherein two or more phases are grouped.

6. The TLVR of claim 5, for phases within a group, secondary inductor windings are wrapped around two or more posts.

7. The TLVR of claim 6, wherein the two or more posts are separate from posts around which primary inductor windings are wrapped; or
wherein the two or ore posts are the same posts around which the primary inductor windings are wrapped.

8. The TLVR of claim 6 or 7, wherein a compensation inductor is external to the secondary windings; or
wherein the compensation inductor is included within the secondary windings.

9. A processing device, the processing device comprising:
a processing unit;
a printed circuit board (PCB) in communication with the processing unit;
a Trans-Inductor Voltage Regulator (TLVR), comprising:
a plurality of phases, each of the plurality of phases comprising a transistor receiving an input voltage;
wherein a first phase transistor outputs to a plurality of secondary inductors, each of the secondary inductors corresponding to a respective phase; and
wherein at least a second phase transistor outputs to a primary inductor corresponding to one of the secondary inductors; and
wherein winding currents through each primary inductor and corresponding secondary inductor are balanced.

10. The processing device of claim 9, wherein the first phase outputs to a compensation inductor.

11. The processing device of claim 10, wherein the compensation inductor outputs to each of the secondary inductors in series.

12. The processing device of one of claims 9 to 11, wherein an output of the secondary inductors and an output of the primary inductors are provided to a same output node; and/or
wherein the transistor comprises a metal-oxide-semiconductor field-effect-transistor (MOSFET).

13. The processing device of one of claims 9 to 12, wherein two or more phases are grouped.

14. The processing device of claim 13, for phases within a group, secondary inductor windings are wrapped around two or more posts.

15. The processing device of claim 14, wherein the two or more posts are separate from posts around which primary inductor windings are wrapped.
